(19) **Europäisches Patentamt / European Patent Office / Office européen des brevets**

(11) **EP 3 909 125 B1**

(12) **EUROPÄISCHE PATENTSCHRIFT**

(45) Veröffentlichungstag und Bekanntmachung des Hinweises auf die Patenterteilung:
**22.01.2025  Patentblatt 2025/04**

(21) Anmeldenummer: **20740231.4**

(22) Anmeldetag: **05.05.2020**

(51) Internationale Patentklassifikation (IPC):
*H02P 29/024* (2016.01)    *H02P 29/60* (2016.01)
*H02K 11/33* (2016.01)    *H02K 9/06* (2006.01)
*H02K 7/14* (2006.01)    *H02K 11/20* (2016.01)

(52) Gemeinsame Patentklassifikation (CPC):
**H02P 29/60; H02K 7/14; H02K 9/06; H02K 11/20; H02K 11/33; H02P 29/024**

(86) Internationale Anmeldenummer:
**PCT/DE2020/200032**

(87) Internationale Veröffentlichungsnummer:
**WO 2020/249167 (17.12.2020 Gazette 2020/51)**

(54) **VERFAHREN ZUM BESTIMMEN EINES ZUSTANDS EINES ELEKTROMOTORS UND ENTSPRECHENDER ELEKTROMOTOR SOWIE VENTILATOR**

METHOD FOR DETERMINING THE STATE OF AN ELECTRIC MOTOR, AND CORRESPONDING ELECTRIC MOTOR AND VENTILATOR

PROCÉDÉ POUR DÉTERMINER UN ÉTAT D'UN MOTEUR ÉLECTRIQUE, MOTEUR ÉLECTRIQUE CORRESPONDANT ET VENTILATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **13.06.2019  DE 102019208637**

(43) Veröffentlichungstag der Anmeldung:
**17.11.2021  Patentblatt 2021/46**

(73) Patentinhaber: **ZIEHL-ABEGG SE**
**74653 Künzelsau (DE)**

(72) Erfinder:
• **OBST, Raphael Simon**
**74613 Öhringen (DE)**
• **KRCMAR, Mato Mathias**
**74613 Öhringen (DE)**

(74) Vertreter: **Ullrich & Naumann PartG mbB**
**Schneidmühlstrasse 21**
**69115 Heidelberg (DE)**

(56) Entgegenhaltungen:
WO-A1-2016/044426    CN-A- 109 038 961
CN-A- 109 038 961    DE-A1- 102015 105 188

• WERNER REINHARD: "Störungstolerantes Sensorsystem zur Zustandsüberwachung rotodynamischer Pumpen", 16 September 2011 (2011-09-16), pages I - IV, 83, XP002691344, Retrieved from the Internet <URL:http://tuprints. ulb.tu-darmstadt. de/2760/1/Berichtveroeffentlicht.pdf>

**Beschreibung**

Die Erfindung betrifft ein Verfahren zum Bestimmen eines Zustands eines Elektromotors, der einen Stator und einen relativ zu dem Stator drehbar gelagerten Rotor aufweist. Ferner betrifft die Erfindung einen entsprechenden Elektromotor sowie einen Ventilator.

Das Betriebsverhalten eines Elektromotors und dessen Lebenserwartung hängen von vielen Faktoren ab. Ein wichtiger Faktor ist die Temperatur, die sich im Elektromotor, an Komponenten des Elektromotors und/oder an dessen Oberfläche einstellt. So hat die Temperatur unmittelbaren Einfluss auf die Lebenserwartung der Lager des Rotors. Die Lebensdauer der Lager hängt maßgeblich von den verbleibenden Schmiereigenschaften des Lagerfetts ab. Eine Erhöhung der Lagertemperatur um 10 Kelvin hat bereits eine Halbierung der Lebenserwartung des Lagers zur Folge, da bei höheren Temperaturen und der damit einhergehenden niedrigeren Viskosität des Lagerfetts einfacher Schmiermittel aus dem Lager austreten kann. Auch Elektronikbauteile können durch Übertemperatur in Mitleidenschaft gezogen werden. Daher ist es bei Elektromotoren wichtig, dass eine ausreichende Entwärmung des Elektromotors sichergestellt ist.

In vielen Fällen ist es für eine ausreichende Entwärmung wichtig, dass Ventilationseffekte, die durch eine Drehbewegung des Rotors relativ zu dem Stator hervorgerufen werden, zu einer ausreichenden Luftbewegung führen. Insbesondere bei Betriebsumgebung mit einem hohen Anteil an Verunreinigungen, beispielsweise in der Landwirtschaft, können sich Partikel, beispielsweise Staub, in dem Elektromotor ansammeln. Diese schwächen einerseits die Ventilationseffekte ab, oder bringen sie vollständig zum Erliegen. Andererseits wird aber auch das durch natürliche Konvektion bedingte Kühlverhalten, insbesondere an den Kühlrippen des Stators, negativ beeinflusst. Auf diese Weise kann die Entwärmung des Elektromotors so stark beeinträchtigt sein, dass ein verfrühter Ausfall des Elektromotors zu befürchten ist.

In einem anderen Szenarium, das zu einem verfrühten Ausfall des Elektromotors führen kann, liegt eine Undichtigkeit vor. Wenn eine Elektronik in dem Elektromotor angeordnet ist, sollte diese ausreichend gegenüber Einflüssen aus einer Umgebung des Elektromotors abgedichtet sein, um beispielsweise Korrosion oder Kurzschlüsse infolge von eindringender Feuchtigkeit zu vermeiden. Wenn durch Beschädigung eines Abschlussdeckels, eine unzureichende Verschraubung eines Deckels oder eine sonstige Undichtigkeitsstelle die notwendige Dichtigkeit eines Elektronikgehäuses nicht mehr vorhanden ist, kann eindringende Feuchtigkeit die in dem Elektronikgehäuse angeordnete Elektronik und damit den Elektromotor zerstören. Zudem können auch hierbei die Ventilationseffekte negativ beeinflusst sein, da die bewegte Luft nicht mehr definierte Wege nimmt.

Beide voranstehend beispielhaft aufgezeigten Szenarien können mit den aus der Praxis bekannten Verfahren nicht zuverlässig erkannt werden. Dies ist jedoch wünschenswert, um Präventivmaßnahmen einleiten zu können, beispielsweise eine Wartung oder eine Säuberung des Elektromotors. Ferner könnte durch diese Zustandsinformationen eine Voraussage der zu erwartenden Lebensdauer des Elektromotors verbessert werden.

Aus der DE 10 2018 211 838 A1 sind Verfahren bekannt, mit denen Unwuchten eines Ventilators, beispielsweise infolge von an dem Laufrad anhaftenden Verschmutzungen, detektiert werden können. Diese Unwuchten lassen auch gewisse Rückschlüsse auf eine Verschmutzung des Elektromotors insgesamt zu. Allerdings sind diese Verfahren lediglich dann nutzbar, wenn Anhaftungen tatsächlich zu einer Unwucht führen. Verschmutzungen, die keine nennenswerte Unwuchten erzeugen und maßgeblich Ventilationseffekte des Rotors behindern, sind nicht erkennbar. Selbst wenn Unwuchten entstehen, ist der Zusammenhang mit der tatsächlichen Verschmutzung des Elektromotors lediglich basierend auf Erfahrungswerten näherungsweise bestimmbar. Für das Erkennen von Undichtigkeiten sind diese Verfahren nicht ausgelegt.

Weitere Verfahren und Elektromotoren sind aus den Dokumenten WO 2016/044426 A1 ,DE 10 2015/105188 A1, CN 109 038 961 A sowie WERNER REINHARD: "Störungstolerantes Sensorsystem zur Zustandsüberwachung rotodynamischer Pumpen", 16. September 2011 (2011-09-16), Seiten I-IV, 83 bekannt.

Der vorliegenden Erfindung liegt daher die Aufgabe zugrunde, ein Verfahren, einen Elektromotor sowie einen Ventilator der eingangs genannten Art derart auszugestalten und weiterzubilden, dass eine zuverlässige Bestimmung eines Zustands des Elektromotors bei geringem Aufwand möglich ist.

Erfindungsgemäß wird die voranstehende Aufgabe durch die Merkmale des Anspruches 1 gelöst. Danach nutzt das in Rede stehende Verfahren einen Effekt, nach dem aufgrund einer Drehbewegung des Rotors in einem Luftraum innerhalb des Elektromotors eine Druckdifferenz relativ zu einer Umgebung des Elektromotors hervorgerufen wird, wobei in einem Normalzustand des Elektromotors die Druckdifferenz von einer Ist-Drehzahl des Rotors abhängig ist. Das Verfahren umfasst die Schritte:

Ermitteln einer Ist-Druckdifferenz zwischen dem Luftraum und einer Umgebung des Elektromotors,
Ermitteln der Ist-Drehzahl des Rotors und
Berechnen einer Kenngröße basierend auf der Ist-Druckdifferenz und der Ist-Drehzahl, wodurch eine für den Zustand des Elektromotors repräsentative Kenngröße entsteht, wobei die Kenngröße mit einem Schwellenwert verglichen wird und dass ein Zustand des Elektromotors basierend auf einem Ergebnis des Vergleichs der Kenngröße mit dem Schwellenwert bestimmt wird.

Hinsichtlich eines Elektromotors ist die voranstehende Aufgabe durch die Merkmale des Anspruchs 7 gelöst. Danach umfasst der in Rede stehende Elektromotor einen Stator, einen relativ zu dem Stator drehbar gelagerten Rotor und einen innerhalb des Elektromotors gebildeten Luftraums, wobei in einem Normalzustand des Elektromotors der Rotor aufgrund seiner Drehbewegung in dem Luftraum eine Druckdifferenz gegenüber einer Umgebung des Elektromotors hervorruft, wobei der Elektromotor zusätzlich ein Drucksensorsystem, ein Drehzahlermittlungssystem und eine Auswerteeinheit umfasst, wobei das Drucksensorsystem zum Ermitteln einer Ist-Druckdifferenz zwischen einer Umgebung des Elektromotors und dem Luftraum ausgebildet ist, wobei das Drehzahlermittlungssystem zum Ermitteln einer Ist-Drehzahl des Rotors ausgebildet ist und wobei die Auswerteeinheit dazu ausgebildet ist, basierend auf der Ist-Druckdifferenz und der Ist-Drehzahl einen Zustand des Elektromotors zu bestimmen.

Hinsichtlich eines Ventilator ist die voranstehende Aufgabe durch die Merkmale des Anspruchs 14 gelöst. Danach umfasst der in Rede stehende Ventilator einen erfindungsgemäßen Elektromotor und ein Laufrad, das mit dem Rotor des Elektromotors gekoppelt ist.

In erfindungsgemäßer Weise ist zunächst erkannt worden, dass Ventilationseffekte, die durch eine Drehbewegung des Rotors hervorgerufen werden, nicht lediglich zu einer Luftbewegung zur Begünstigung der Entwärmung des Elektromotors führen. Vielmehr führen die Ventilationseffekte üblicherweise auch dazu, dass der Luftdruck in verschiedenen Bereichen innerhalb des Elektromotors beeinflusst wird. Dadurch entsteht zumindest in Bereichen innerhalb des Elektromotors - nachfolgend auch als Luftraum bezeichnet - eine Druckdifferenz relativ zu einer Umgebung des Elektromotors, die repräsentativ für das Ausmaß der Ventilationseffekte ist. Aus dieser Druckdifferenz können Rückschlüsse auf einen Zustand des Elektromotors gezogen werden.

Erfindungsgemäß wird ein Drucksensorsystem genutzt, mit dem in dem Luftraum innerhalb des Elektromotors relativ zu einer Umgebung des Elektromotors eine Ist-Druckdifferenz ermittelt wird. Der Luftraum ist dabei ein Bereich innerhalb des Elektromotors, in dem eine Drehbewegung des Rotors des Elektromotors die zuvor beschriebene Druckdifferenz hervorruft. Diese Druckdifferenz ist in einem Normalzustand von einer Ist-Drehzahl des Motors abhängig, wobei der Normalzustand ein Zustand eines fabrikneuen und sauberen Elektromotors sein kann. Daher wird die Ist-Drehzahl ermittelt, bei der die Ist-Druckdifferenz ermittelt worden ist. Basierend auf der ermittelten Ist-Druckdifferenz und der ermittelten Ist-Drehzahl wird eine Kenngröße berechnet, die für einen Zustand des Elektromotors repräsentativ ist. Diese Kenngröße kann beispielsweise beschreiben, "wie weit" der Zustand des Elektromotors von einem Normalzustand entfernt ist oder wie viel Falschluft durch den Elektromotor gezogen wird. Auf diese Weise entstehen ein Verfahren und ein Elektromotor, die mit geringem Zusatzaufwand eine Zustandsbestimmung ermöglichen.

Welche Druckdifferenz sich in dem Luftraum einstellt, wird neben der Ist-Drehzahl im Wesentlichen von dem Aufbau des Motors und dem Ort des Luftraums abhängen. So kann der Luftraum ein Bereich innerhalb des Elektromotors sein, aus dem durch die Ventilationseffekte Luft herausgesogen wird. In diesem Fall wird sich in diesem Luftraum ein Unterdruck einstellen. Der Luftraum kann aber auch an einer Stelle innerhalb des Elektromotors ausgebildet sein, in den die Ventilationseffekte Luft hineindrücken. In diesem Fall wird sich in diesem Luftraum ein Überdruck einstellen. Beide Fälle können im Zusammenhang mit der erfindungsgemäßen Lehre genutzt werden, solange die Druckdifferenz ausreichend groß ist, um mit vertretbarem Aufwand gemessen zu werden.

Unter dem Begriff "Umgebung des Elektromotors", relativ zu der die Druckdifferenz ermittelt werden soll, wird ganz allgemein ein Bereich außerhalb des Elektromotors verstanden, der im günstigsten Fall durch den Elektromotor oder durch das System, in dem der Elektromotor betrieben wird (beispielsweise ein Ventilator), luftdruckmäßig nicht oder allenfalls in geringem Maße beeinflusst wird. Damit sollte diese "Umgebung" nicht im Einflussbereich eines Kühlrades oder unmittelbar bei einem Luftauslass des Elektromotors liegen. Gleichzeitig sollte dieser Bereich nicht "zu weit" von dem Elektromotor entfernt sein, damit ein ermittelter Luftdruck der Umgebung auch einen repräsentativen Wert bei Bestimmung der Druckdifferenz bilden kann. Daher sollte dieser Bereich vorzugsweise nicht weiter als 100 Meter, besonders bevorzugter Weise nicht weiter als 50 Meter und ganz besonders bevorzugter Weise nicht weiter als 10 Meter von dem Elektromotor entfernt sein. Von dieser Definition kann es eine Ausnahme geben, wenn der Elektromotor Teil eines Ventilators ist und dieser Ventilator durch vorbeiströmende Luft den Luftdruck im Inneren des Elektromotors mit beeinflusst. In diesem Fall kann die "Umgebung des Elektromotors" in der unmittelbaren Nähe des Elektromotors sein, d.h. weniger als 50cm von einer äußeren Oberfläche des Elektromotors entfernt, vorzugsweise weniger als 20cm, besonders bevorzugter Weise weniger als 10cm. Da das Laufrad dieses Ventilators einen Einfluss auf den Umgebungsdruck oder den Druck im Laufraum innerhalb des Elektromotors haben kann, kann der Einfluss des Laufrades herausgerechnet werden. Hierzu kann beispielsweise ein Modell des Ventilators genutzt werden, beispielsweise ein digitaler Zwilling, wie er in der DE 10 2019 201 409 A1 oder der DE 10 2019 201 412 A1 beschrieben ist.

Das erfindungsgemäße Verfahren kann prinzipiell für die Bestimmung verschiedenster Zustände genutzt werden. Wichtig ist dabei, dass die zu bestimmenden Zustände eine Auswirkung auf Druckverhältnisse innerhalb des Elektromotors haben und damit eine Druckdifferenz in dem Luftraum innerhalb des Elektromotors hervorrufen. Dies ist insbesondere dann der Fall, wenn die Zustände Auswirkungen auf Ventilationseffekte innerhalb des Elektromotors haben. Ein zu bestimmender Zustand kann eine Undichtigkeit an einer üblicherweise dichten Stelle des Elektromotors angeben, wenn die Undichtigkeit Einfluss auf den Druck in dem Luftraum hat. In einer anderen Ausgestaltung kann der zu bestimmende Zustand eine Beeinflussung von Strömungskanälen innerhalb des Elektromotors angeben. Dies kann durch Verschmutzungen, wie beispielsweise durch Staub oder sonstigem anhaftenden Schmutz, herbeigeführt sein. Allerdings wäre auch denkbar, dass eine Vereisung oder eine Verschmutzung (beispielsweise durch angesaugte Blätter) an einem Lufteinlass eine derartige Beeinflussung darstellt.

Aus der Kenngröße können bereits ausreichend Informationen über den Zustand eines Elektromotors abgelesen werden. So kann diese Kenngröße beispielsweise angeben, dass der Elektromotor "zu 7% verschmutzt" oder "zu 90% sauber" ist, um lediglich zwei mögliche Aussagen der Kenngröße beispielhaft zu nennen. Diese Kenngröße kann an übergeordnete Systeme ausgegeben werden, um beispielsweise als Verschmutzungsgrad in einem thermischen Modell verwendet zu werden. Die Kenngröße kann jedoch - in einer Weiterbildung - auch dazu verwendet werden, um den Zustand des Elektromotors in eine Art Zustandskategorie einzuteilen, beispielsweise "Normalzustand", "leicht verschmutz", "stark verschmutz" oder "undicht", um einige mögliche Zustandskategorien zu nennen. Die Kenngröße wird mit einem Schwellenwert verglichen und eine Zustandskategorie oder allgemein ein Zustand des Elektromotors basierend auf einem Ergebnis des Vergleichs der Kenngröße wird mit dem Schwellenwert bestimmt. Dabei können auch mehrere Schwellenwerte genutzt werden, sodass mehrere Zustände erkannt und voneinander unterschieden werden können.

Der Schwellenwert und der Vergleich mit demselben können dabei auf verschiedenste Weise realisiert sein. Die Ausgestaltung hängt im Wesentlichen davon ab, welcher Zustand zu bestimmen ist und wie die Kenngröße berechnet wird. So ist denkbar, dass die Kenngröße einen Verschmutzungsgrad des Elektromotors angibt und dass der Schwellenwert festlegt, bis zu welcher Druckdifferenz ein Elektromotor als im "Normalzustand" befindlich und ab welcher Druckdifferenz der Elektromotor als "verschmutzt" oder "stark verschmutzt" anzusehen ist. In einer anderen Ausgestaltung kann die Kenngröße den "Abstand" zu einer initialen Kenngröße angeben, die während einer Inbetriebnahme oder einer Endprüfung des Elektromotors nach dessen Fertigung bestimmt worden ist. In diesem Fall kann der Schwellenwert angeben, welcher Abstand zu dem "Normalzustand" als akzeptabel angesehen werden kann und ab welchem Abstand Gegenmaßnahmen ergriffen werden sollten. Wenn eine unerwünschte Undichtigkeit als Zustand bestimmt werden soll, so kann die Drehzahlabhängigkeit der Kenngröße ausgewertet werden. Wenn sich die Kenngröße nicht oder lediglich unwesentlich bei einer Drehzahländerung verändert, also die Änderung der Kenngröße bei unterschiedlichen Drehzahlen unterhalb eines Schwellenwerts bleibt, so kann auf den Zustand "undicht" geschlossen werden.

Der Schwellenwert kann als konstanter und vordefinierter Wert gegeben sein. Allerdings ist es in einer Weiterbildung auch denkbar, dass der Schwellenwert basierend auf weiteren Rahmenbedingungen angepasst wird. So hat beispielsweise die Einbaulage des Elektromotors einen Einfluss auf die Entwärmung des Elektromotors und kann daher zu einer Schwellenwertanpassung herangezogen werden. Zudem hat beispielsweise auch die Belastung oder allgemein gesprochen der Betriebspunkt des Elektromotors einen Einfluss auf die Temperatur innerhalb des Elektromotors. Wenn der Elektromotor lediglich mit einem geringen Lastmoment belastet ist, entsteht weniger Abwärme, die dann auch bei einem relativ stark verschmutzten Elektromotor noch ausreichend gut abgeführt werden kann. Wenn der Elektromotor mit einem relativ großen Lastmoment belastet ist, kann bereits eine leichte Verschmutzung des Elektromotors zu einer thermischen Überlastung des Elektromotors führen. Daher kann der Betriebspunkt des Elektromotors dazu verwendet werden, den Schwellenwert/die Schwellenwerte anzupassen. Für diese Schwellenwertanpassung kann ein thermisches Modell des Elektromotors verwendet werden. Generell kann die Schwellenwertanpassung mit Hilfe eines Digitalen Zwillings erfolgen, wie er beispielsweise in der DE 10 2019 201 409 A1 oder der DE 10 2019 201 412 A1 beschrieben ist.

Die Kenngröße kann auf verschiedenste Weise realisiert sein. Da eine Abhängigkeit der Druckdifferenz von der Drehzahl genutzt wird, ist wichtig, dass die Kenngröße eine Abhängigkeit von der Ist-Druckdifferenz und der Ist-Drehzahl aufweist. Wie diese Abhängigkeit konkret aussieht, ist für das erfindungsgemäße Verfahren prinzipiell nicht entscheidend. Lineare Zusammenhänge können ebenso eine geeignete Kenngröße bilden wie polynomiale oder exponentielle Zusammenhänge, Quotienten oder Kombinationen von verschiedenen Zusammenhängen. Neben der Ist-Druckdifferenz und der Ist-Drehzahl können noch weitere Größen in der Kenngröße genutzt werden, wie beispielsweise zu einem früheren Zeitpunkt bei Betrieb des Elektromotors gemessene Druckdifferenzen oder eine Druckkennlinie des Elektromotors. Es ist prinzipiell sogar denkbar, dass der Elektromotor bei einer Prüfdrehzahl, beispielsweise 1000 Umdrehungen pro Minute, betrieben wird und dass sich die Kenngröße dann im Wesentlichen auf die Ist-Druckdifferenz reduziert. In einer besonders bevorzugten Ausgestaltung wird die Kenngröße als Quotient aus Ist-Druckdifferenz und dem Quadrat der Ist-Drehzahl berechnet.

In einer Weiterbildung kann die Kenngröße auf einen Referenzwert genormt sein. Auf diese Weise kann eine Kenngröße entstehen, der in einem vordefinierten Bereich liegt, beispielsweise zwischen 0 und 1 oder 0% und 100%. Der Referenzwert kann ein fester Zahlenwert sein. Allerdings ist auch denkbar, dass der Referenzwert eine Abhängigkeit von der Drehzahl des Elektromotors aufweist, wobei es sich anbietet, wenn der Referenzwert und die Kenngröße dieselbe Abhängigkeit von der Drehzahl aufweisen. Der Referenzwert kann auf verschiedene Weise gewonnen sein. So kann ein fabrikneuer Elektromotor gleichen Typs auf einem Prüfstand vermessen werden und durch Erfassen der Druckdifferenz zusammen mit der jeweiligen Drehzahl ein drehzahlabhängiger Referenzwert entstehen. Wenn der Referenzwert ein einzelner Zahlenwert ist, kann der Referenzwert durch Bestimmen der Druckdifferenz bei einer bestimmten Drehzahl, beispielsweise der Nenndrehzahl des Elektromotors, gebildet sein.

In einer bevorzugten Ausgestaltung der Nutzung eines Referenzwertes wird dieser bei einer Erstinbetriebnahme des Elektromotors und/oder bei einer Endprüfung nach Fertigung des Elektromotors ermittelt, wobei der Elektromotor in dieser Ausgestaltung der Elektromotor ist, bei dem das erfindungsgemäße Verfahren ausgeführt wird. Diese Ausgestaltung bietet den Vorteil, dass Exemplarstreuungen bei Elektromotoren gleichen Typs nicht den Referenzwert beeinflussen. In vielen Fällen entsteht bei dieser Ausgestaltung praktisch kein oder allenfalls ein geringer Zusatzaufwand, da sehr viele Elektromotoren ohnehin nach der Fertigung und/oder bei der Erstinbetriebnahme auf das Einhalten eines Sollverhaltens überprüft werden, beispielsweise das Hochlaufverhalten, die Schwingungsfestigkeit, die Wuchtgüte oder die Energieaufnahme.

Prinzipiell ist es für das erfindungsgemäße Verfahren unerheblich, auf welche Weise die Ist-Druckdifferenz ermittelt wird. Wesentlich ist, dass die Druckdifferenz zwischen dem Luftraum innerhalb des Elektromotors und einer Umgebung des Elektromotors angegeben werden kann. Dabei ist es möglich, dass ein Druckwert, der für das Innere des Luftraums repräsentativ ist, und ein Druckwert, der für eine Umgebung des Elektromotors repräsentativ ist, gemessen und in ein Verhältnis zueinander gesetzt werden. Allerdings ist auch denkbar, dass die Ist-Druckdifferenz direkt mit einem Differenzdrucksensor ermittelt wird. Generell beziehen sich die Druckwerte auf einen Luftdruck.

Wenn ein Luftdruck in dem Luftraum ermittelt wird, so kann dies durch Anordnung eines Drucksensors im Inneren des Luftraums geschehen. Insbesondere wenn der Luftraum durch ein Elektronikgehäuse gebildet und in diesem Elektronikgehäuse ohnehin Elektronik angeordnet ist, kann der Drucksensor auf der Elektronik integriert sein. Allerdings ist auch denkbar, dass eine Druckleitung den Luftraum mit einem Messraum verbindet, sodass sich in dem Luftraum und dem Messraum annähernd gleiche Luftdrücke einstellen. Die eigentliche Druckmessung erfolgt dann in dem Messraum. Diese Ausgestaltung bietet den Vorteil, dass ein Drucksensor auch außerhalb des Elektromotors angeordnet sein kann und dass damit auch bestehende Elektromotoren einfach für ein erfindungsgemäßes Verfahren nachgerüstet werden können.

In einer besonders einfachen Ausgestaltung wird der Luftdruck der Umgebung geschätzt. Dies kann dadurch geschehen, dass ein Luftdruck der Umgebung, beispielsweise bei einer Ersteinrichtung, gemessen wird oder dass ein Luftdruckwert als Mittelwert aus verschiedenen Luftdrücken zu unterschiedlichen Zeiten an dem Aufstellort berechnet wird. Vorzugsweise wird der Luftdruck der Umgebung jedoch während oder zeitnah zu der Messung des Luftdrucks in dem Luftraum gemessen.

In einer Ausgestaltung der Ermittlung der Ist-Druckdifferenz wird ein einzelner Absolutdrucksensor eingesetzt, der Druckwerte bei unterschiedlichen Drehzahlen des Elektromotors erfasst, wobei diese Druckwerte Luftdrücke repräsentieren, die innerhalb des Luftraums vorliegen. In dieser Ausgestaltung ist das Drucksensorsystem durch einen Absolutdrucksensor und eine drehzahlabhängige Berechnungseinheit gebildet. Diese Ausgestaltung ist insbesondere bei einem dynamischen Betrieb des Elektromotors nutzbar, d.h. in Einsatzszenarien, in denen der Elektromotor innerhalb eines Zeitfensters, beispielsweise innerhalb von wenigen Sekunden, wenigen Minuten, 15 Minuten oder von einer Stunde, bei mindestens zwei, deutlich unterschiedlichen Drehzahlen betrieben wird, beispielsweise Stillstand und 1.000 Umdrehungen pro Minute oder 100 und 2.000 Umdrehungen pro Minute. Dabei werden zwei Effekte ausgenutzt: Zum einen ändert sich der Umgebungsluftdruck gewöhnlich nur langsam, sodass eine Messung des Umgebungsluftdrucks für eine gewisse Zeit hinreichend genau für den aktuellen Umgebungsluftdruck ist. Zum anderen wird sich aufgrund der Drehzahlabhängkeit der Ist-Druckdifferenz der Luftdruck in dem Luftraum dem Umgebungsluftdruck annähern, je niedriger die Drehzahl ist. Daher wird vorzugsweise eine erste Messung bei Stillstand des Elektromotors (d.h. Drehzahl des Motors gleich 0 oder zumindest annähernd 0) und eine zweite Messung bei einer Drehzahl ungleich 0 durchgeführt, wobei die zweite Messung zeitlich zwar bevorzugt aber nicht zwingend nach der ersten Messung erfolgen muss. Der Messwert bei der ersten Messung kann dann einem Umgebungsluftdruck gleichgesetzt werden, sodass eine Ist-Druckdifferenz durch Vergleich des Messwerts aus der ersten Messung und des Messwerts aus der zweiten Messung ermittelt werden kann. Dabei sollte die Drehzahl bei der zweiten Messung hinreichend groß sein, dass sich eine messbare Druckdifferenz einstellt.

Die erste Messung und die zweite Messung sollten zeitlich nicht weiter als 3 Stunden, vorzugsweise nicht weiter als 1 Stunde, ganz besonders bevorzugter Weise nicht weiter als 30 Minuten voneinander entfernt sein. Die Wahl des zeitlichen Abstands zwischen erster und zweiter Messung kann von dem Einsatzszenarium des Elektromotors abhängig gemacht werden. Wenn der Elektromotor beispielsweise in einem weitgehend geschlossenen Raum betrieben wird, so dürfte der Umgebungsluftdruck lediglich geringen Änderungen unterworfen sein und der zeitliche Abstand zwischen erster und zweiter Messung kann groß gewählt werden. Wenn der Elektromotor in einem Bereich eingesetzt wird, in dem sich der Umgebungsluftdruck durch sich öffnende Türen, Fenster oder Schleusen, durch sich stark ändernde Temperaturen oder durch weitere Effekte beeinflusst wird, so empfehlen sich kürzere zeitliche Abstände. Hier kann sich dann ein zeitlicher Abstand kleiner als 30 Sekunden, beispielsweise zwischen 5 und 20 Sekunden, anbieten.

In einer anderen Ausgestaltung der Ermittlung der Ist-Druckdifferenz werden zwei Absolutdrucksensoren eingesetzt. Hierbei ist ein erster Absolutdrucksensor mit einem Luftdruck in dem Luftraum beaufschlagt und ein zweiter Absolutdrucksensor mit einem Luftdruck, der repräsentativ für einen Druck in einer Umgebung des Elektromotors ist. Auf diese Weise kann die Ist-Druckdifferenz durch Subtrahieren der Messwerte des ersten und des zweiten Absolutdrucksensors gebildet werden. Der erste und der zweite Absolutdrucksensor bilden damit ein Drucksensorsystem.

In einer weiteren Ausgestaltung der Ermittlung der Ist-Druckdifferenz wird als Drucksensorsystem ein Differenzdrucksensor verwendet. Dabei wird eine erste Sensorfläche des Differenzdrucksensors mit einem Luftdruck, der innerhalb des Luftraums herrscht, und eine zweite Sensorfläche des Differenzdrucksensors mit einem Luftdruck, der in der Umgebung des Elektromotors herrscht, beaufschlagt. Geeignete Differenzdrucksensoren sind aus der Praxis bekannt. Diese Ausgestaltung bietet den Vorteil, dass die Ist-Druckdifferenz direkt als Messwert vorliegt und üblicherweise keine Berechnungsschritte zum Ermitteln der Ist-Druckdifferenz notwendig sind.

Prinzipiell kann die Ist-Druckdifferenz und/oder die berechnete Kenngröße zu einem einzelnen Zeitpunkt ermittelt und daraus auf den Zustand des Elektromotors geschlossen und eventuelle Gegenmaßnahmen initiiert werden. Allerdings ist auch denkbar, dass zur Vermeidung von Fehleinschätzungen und Fehlbestimmungen mehrere Ist-Druckdifferenzen und/oder mehrere Kenngrößen ermittelt werden und dass der Zustand des Elektromotors basierend auf einer gemittelten Ist-Druckdifferenz und/oder einer gemittelten Kenngröße bestimmt wird.

Ein erfindungsgemäßer Elektromotor umfasst einen Stator, einen relativ zu dem Stator drehbar gelagerten Rotor und einen innerhalb des Elektromotors gebildeten Luftraums. Dabei ruft der Rotor aufgrund seiner Drehbewegung in dem Luftraum innerhalb des Elektromotors eine Druckdifferenz gegenüber einer Umgebung des Elektromotors hervor. Die Druckdifferenz bildet sich insbesondere bei einem Normalzustand des Elektromotors aus. Dieser Normalzustand kann beispielsweise real vorliegen oder bei einer Erstinbetriebnahme vorgelegen haben. Der erfindungsgemäße Elektromotor umfasst zusätzlich ein Drucksensorsystem, ein Drehzahlermittlungssystem und eine Auswerteeinheit, wobei das Drucksensorsystem zum Ermitteln einer Ist-Druckdifferenz zwischen einer Umgebung des Elektromotors und dem Luftraum ausgebildet ist. Das Drehzahlermittlungssystem ist zum Ermitteln einer Ist-Drehzahl des Rotors ausgebildet, wobei die Ist-Druckdifferenz und die Ist-Drehzahl vorzugsweise gleichzeitig oder zumindest zeitnah (beispielsweise innerhalb von einer zehntel Sekunde oder innerhalb weniger Sekunden) ermittelt werden. Die Auswerteeinheit ist dazu ausgebildet, basierend auf der Ist-Druckdifferenz und der Ist-Drehzahl einen Zustand des Elektromotors zu bestimmen. Der erfindungsgemäße Elektromotor ist vorzugsweise zur Durchführung des erfindungsgemäßen Verfahrens ausgebildet.

Prinzipiell ist es für das erfindungsgemäße Verfahren und den erfindungsgemäßen Elektromotor unerheblich, auf welche Weise die Ist-Druckdifferenz hervorgerufen wird. Bereits die Luftbewegungen, die durch die rotierende Rotorglocke, je nach Motortyp mit Magneten oder einem Rotorwicklungspaket, erzeugt werden, können ausreichen, um eine messbare Druckdifferenz hervorzurufen. In einer bevorzugten Weiterbildung ist die Ist-Druckdifferenz jedoch durch ein Kühlrad hervorgerufen, das mit dem Rotor gekoppelt ist, sodass eine Drehung des Rotors zu einer Drehung des Kühlrads (meist mit identischer Drehzahl) führt. Ein derartiges Kühlrad fördert Luft aus der Umgebung des Elektromotors durch den Stator und/oder Rotor des Elektromotors und sorgt dadurch für eine Entwärmung des Elektromotors. Durch ein derartiges Kühlrad wird eine relativ große Luftmenge bewegt, sodass eine gut messbare Ist-Druckdifferenz entsteht.

Alternativ oder zusätzlich kann die Ist-Druckdifferenz in dem Luftraum durch einen Luftauslass des Elektromotors beeinflusst werden, wobei der Luftauslass mit Stator-Rotor-Rippen und/oder einem Labyrinthspalt ausgestaltet sein kann. Je freier die durch Ventilationseffekte bewegte Luft den Elektromotor an dem Luftauslass verlassen kann, desto besser kann der Elektromotor entwärmt werden. Je stärker diese Luftbewegung, beispielsweise durch einen zunehmenden Verschmutzungsgrad, beeinträchtigt ist, desto stärker ist die Entwärmung beeinträchtigt. Es hat sich gezeigt, dass auch dieser Luftauslass bzw. der Grad, wie frei Luft den Elektromotor verlassen kann, ebenfalls Auswirkungen auf die Ist-Druckdifferenz in dem Luftraum hat.

Der Luftraum kann prinzipiell an den verschiedensten Stellen des Elektromotors ausgebildet sein. Solange Ventilationseffekte des Elektromotors eine ausreichende Druckdifferenz in dem Luftraum hervorrufen, ist dieser Luftraum prinzipiell für eine Zustandsbestimmung nutzbar. Vorzugsweise ist der Luftraum jedoch in einem Elektronikgehäuse gebildet, das in oder an dem Elektromotor ausgebildet ist. Dabei ist dieses Elektronikgehäuse besonders bevorzugter Weise an einer Statorbuchse des Elektromotors ausgebildet.

Der Elektromotor kann prinzipiell verschiedentlich ausgebaut sein und/oder es können verschiedene Technologien eingesetzt werden. Wichtig ist, dass ein Rotor relativ zu einem Stator drehbar gelagert ist und dass eine Bewegung des Rotors ausreichend Ventilationseffekte erzeugt, damit in einem Luftraum eine Druckdifferenz entsteht. Vorzugsweise ist der erfindungsgemäße Elektromotor jedoch ein elektronisch kommutierter Motor (EC-Motor) und/oder ein Außenläufermotor.

Zur Nutzung gewonnener Zustandsinformationen kann der Elektromotor eine Kommunikationseinheit aufweisen, die dazu ausgebildet ist, mittels der Auswerteeinheit gewonnenen Zustandsinformationen an eine Managementeinheit zu senden. Die Kommunikationseinheit kann auf verschiedenste Weise ausgebildet sein und es können verschiedenste Kommunikationsstandards und -technologien für eine Datenübertragung eingesetzt werden. Digitale Übertragungstechniken können ebenso genutzt werden wie analoge. Die Übertragung kann drahtgebunden oder drahtlos erfolgen. Es lassen sich parallele oder serielle Übertragungsschnittstellen nutzen. Die Übertragung kann paketiert oder in Direktverbindungen erfolgen. Lediglich beispielhaft, jedoch nicht auf diese beschränkt sei auf die Verwendung von Bluetooth, Bluetooth LE (Low Energy), NFC (Near Field Communication), Ethernet, RS485, Modbus, Profibus, CAN-Bus oder USB (Universal Serial Bus) verwiesen.

Auch die Managementeinheit kann verschiedentlich aufgebaut sein und zusammen mit einem oder mehreren Elektromotoren ein System bilden. Die Managementeinheit kann lokal (beispielsweise im Umkreis von 50 Metern zu dem Elektromotor) oder entfernt (beispielsweise in mehreren Kilometern Entfernung) angeordnet sein. Die Managementeinheit kann dazu ausgebildet sein, bei Erreichen eines vorbestimmten Zustands eine Warnmeldung auszugeben, wodurch beispielsweise eine Wartung oder eine Reinigung des Elektromotors initiiert wird. Vorzugsweise ist die Managementeinheit Teil eines Industrie 4.0 Umfelds.

In dem Elektromotor kann ein Speicher angeordnet sein, der zum Speichern von gewonnen Zustandsinformationen und/oder Kenngrößen und/oder daraus abgeleiteten weiteren Größen ausgebildet ist. Zum Befüllen dieses Speichers kann mit jeder Zustandsbestimmung eine Speicherung von gewonnenen Daten erfolgen. So können die Zustandsbestimmungen periodisch getriggert werden, beispielsweise jeweils nach Ablauf einer Stunde, von 12 Stunden, eines Tages, einer Woche oder einem Monat. Das Intervall dürfte dabei von der Geschwindigkeit der zu erwartenden Zustandsänderungen abhängen. Aus den in dem Speicher abgelegten Informationen kann ein zeitlicher Verlauf gebildet werden, der wiederum Rückschlüsse auf die Art einer Zustandsänderung zulässt.

Der erfindungsgemäße Elektromotor kann Teil eines Ventilators sein. Dabei ist ein Laufrad des Ventilators mit dem Rotor des Elektromotors gekoppelt.

Es gibt nun verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1 einen Schnitt durch ein erstes Ausführungsbeispiel eines erfindungsgemäßen Elektromotors in Außenläuferbauweise mit einem in einem Elektronikgehäuse angeordneten Absolutdrucksensor,

Fig. 2 den Schnitt gemäß Fig. 1 mit zusätzlich eingezeichneten Pfeilen zur Verdeutlichung von Luftbewegungen,

Fig. 3 ein Diagramm einer Druckdifferenz in Abhängigkeit von der Drehzahl für verschiedene Zustände eines Elektromotors,

Fig. 4 einen Schnitt durch ein zweites Ausführungsbeispiel eines erfindungsgemäßen Elektromotors in Außenläuferbauweise mit einem Differenzdrucksensor in einer ersten Ausgestaltung,

Fig. 5 einen Schnitt durch ein drittes Ausführungsbeispiel eines erfindungsgemäßen Elektromotors in Außenläuferbauweise mit einem Differenzdrucksensor in einer zweiten Ausgestaltung,

Fig. 6 einen Schnitt durch ein viertes Ausführungsbeispiel eines erfindungsgemäßen Elektromotors in Außenläuferbauweise mit einem über eine Druckleitung außerhalb des Elektromotors angeordneten Drucksensor,

Fig. 7 einen Schnitt durch eine Abwandlung des Ausführungsbeispiels gemäß Fig. 6 mit einem externen Differenzdrucksensor,

Fig. 8 ein Blockdiagramm mit Grundfunktionselementen einer Schaltung zur Implementierung eines Ausführungsbeispiels des erfindungsgemäßen Verfahrens,

Fig. 9 ein Diagramm mit einem Beispiel eines zeitlichen Verlaufs einer Kenngröße, die einen Zustand des Elektromotors charakterisiert, und

Fig. 10 ein Diagramm mit einem anderen andren Beispiel eines zeitlichen Verlaufs einer Kenngröße.

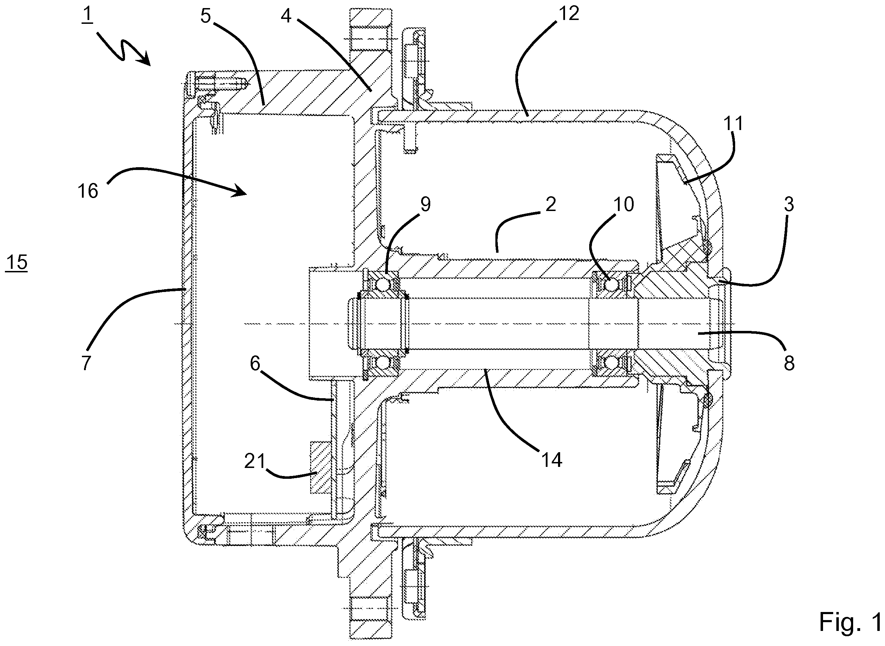

Fig. 1 zeigt einen Schnitt eines ersten Ausführungsbeispiels eines erfindungsgemäßen Elektromotors, der in Außenläuferbauweise aufgebaut ist. Dabei sind - der Übersichtlichkeit wegen - einige Teile weggelassen, die für das Verständnis der Erfindung nicht von Bedeutung sind, beispielsweise die Wicklungspakete für Stator und Rotor und den Großteil der Motorelektronik. Der Elektromotor 1 umfasst einen Stator 2 und einen Rotor 3, die - wie bereits angesprochen - lediglich angedeutet sind. Der Stator 2 ist um eine Statorbuchse 4 angeordnet. An der Statorbuchse 4 ist ein Elektronikgehäuse 5 ausgebildet, in dem eine Motorelektronik 6 angeordnet ist (in Fig. 1 lediglich angedeutet) und das mit einem Abschlussdeckel 7 verschlossen ist. Der Rotor 3 ist um eine Motorachse 8 mittels zweier Lager 9, 10 drehbar gelagert. An den Rotor 3 ist ein Kühlrad 11 gekoppelt, das Luft durch den Elektromotor 1 befördert. Ein Motorgehäuse 12 umschließt den Elektromotor und ist in einem Labyrinthspalt eingesetzt, der dadurch an der Statorbuchse 4 entsteht.

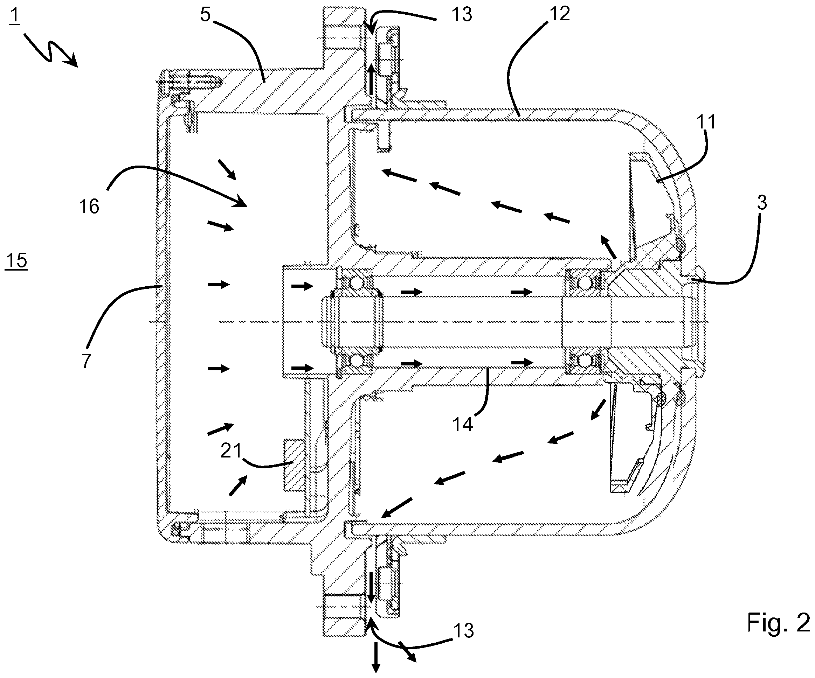

In Fig. 2 ist eingezeichnet, wie sich die Luft bei einer Drehbewegung des Rotors 3 bewegen wird. Das Kühlrad 11 befördert Luft durch den Elektromotor 1, wobei die Luft das Motorgehäuse 12 an dem bezüglich der Motorachse 8 rotationssymmetrischen Bereich 13 verlässt. Die Drehbewegung des Kühlrads 11 sorgt unter anderem dafür, dass Luft aus dem Elektronikgehäuse durch ein in der Statorbuchse gebildetes Lagerrohr 14 gesaugt und zum Bereich 13 befördert wird. Da der Abschlussdeckel 7 das Elektronikgehäuse 5 gegenüber der Umgebung 15 abdichtet, entsteht in dem Elektronikgehäuse 5 eine Druckdifferenz, in diesem Fall ein Unterdruck. Dieser Unterdruck ist von der Drehzahl n des Rotors abhängig. Je größer die Drehzahl desto größer wird der Unterdruck. Dieser Unterdruck ist davon abhängig, wie ungehindert durch Ventilationseffekte Luft in dem Elektromotor 1 bewegt werden kann und wie ungehindert die Luft an Bereich 13 den Elektromotor 1 verlassen kann. Damit ist in dem Elektronikgehäuse 5 ein Luftraum 16 im Sinne der vorliegenden Erfindung gebildet.

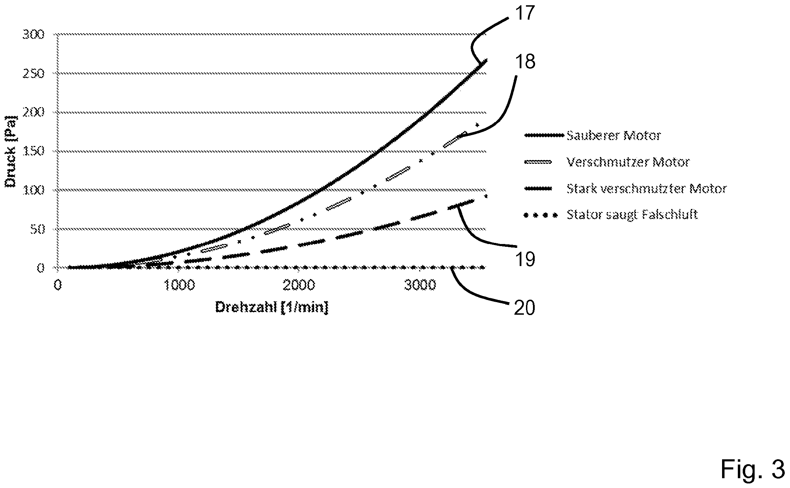

Fig. 3 zeigt beispielhafte Verläufe für den Unterdruck in dem Luftraum 16 in Abhängigkeit der Drehzahl. Die oberste Kurve 17 (durchgezogenen Linie) zeigt den Druckverlauf bei einem sauberen Motor. Das bedeutet, dass hier kein oder wenig Schmutz Ventilationseffekte innerhalb des Elektromotors beeinträchtigt. Dieser Zustand wird hier auch als "Normalzustand" bezeichnet. Diese Kurve kann beispielsweise bei einer Erstinbetriebnahme oder bei einer Endprüfung eines Elektromotors gemessen werden. Die zweite Kurve 18 (strichpunktierten Linie) zeigt einen verschmutzten Motor, die dritte Kurve 19 (gestrichelte Linie) einen stark verschmutzten Motor. Es ist zu erkennen, dass der Druckunterschied in Abhängigkeit der Drehzahl immer geringer wird, je mehr Schmutz die Ventilationseffekte beeinträchtigt. Mit Kurve 20 (punktierte Linie) ist ein weiterer Zustand eingezeichnet, in dem der Abschlussdeckel 7 den Luftraum nicht ausreichend abdeckt. Dies hat zur Folge, dass der durch die Ventilationseffekte erzeugte Unterdruck unmittelbar durch nachströmende Luft ausgeglichen werden kann. Es ist zu erkennen, dass sich der Unterdruck auch mit zunehmender Drehzahl praktisch nicht ausbilden kann. Damit kann geschlossen werden, dass der Motor "Falschluft" saugt.

Zum Ermitteln des Drucks in dem Luftraum 16 ist ein Absolutdrucksensor 21 in dem Luftraum 16 angeordnet, der den Luftdruck in dem Luftraum misst. In dem Ausführungsbeispiel nach Fig. 1 ist dieser Drucksensor 21 auf der Platine der Motorelektronik 6 angeordnet. Die Ist-Druckdifferenz zwischen Luftraum 16 und Umgebung 15 wird dadurch erfasst, dass in dem Luftraum 16 bei einer Drehzahl n = 0 Umdrehungen/min zu einem Zeitpunkt $t_1$ der Luftdruck der Umgebung 15 vorliegt. Zu einem Messzeitpunkt $t_2$ bei einer Drehzahl n ≠ 0 Umdrehungen/min misst derselbe Absolutdrucksensor 21 den Druck im Innenraum des Elektronikgehäuses. Auf diese Weise kann die Ist-Druckdifferenz aus den beiden Druckmesswerten zum Zeitpunkt $t_1$ und zum Zeitpunkt $t_2$ berechnet werden.

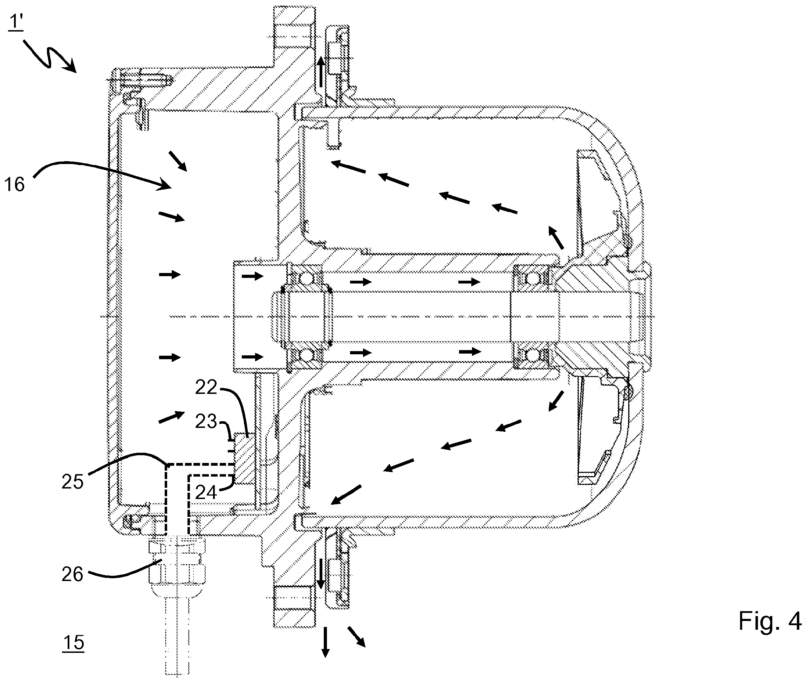

Fig. 4 zeigt ein zweites Ausführungsbeispiel eines erfindungsgemäßen Elektromotors 1'. Dieses Ausführungsbeispiel ähnelt in weiten Teilen dem ersten Ausführungsbeispiel, wobei statt des Absolutdrucksensors 21 nun ein Differenzdrucksensor 22 genutzt wird. Der Differenzdrucksensor 22 weist einen ersten Anschluss 23 und einen zweiten Anschluss 24 auf. Der erste Anschluss 23 leitet einen dort eingegebenen Druck an eine erste Sensorfläche, während der zweite Anschluss 24 einen dort eingegebenen Druck an eine zweite Sensorfläche leitet. Der Differenzdrucksensor 22 misst die Druckdifferenz zwischen der ersten Sensorfläche und der zweiten Sensorfläche und damit zwischen dem in den ersten Anschluss 23 eingegebenen Druck und dem in den zweiten Anschluss 24 eingegebenen Druck. In diesem Ausführungsbeispiel ist der erste Anschluss 23 mit dem Luftdruck in dem Luftraum 16 beaufschlagt. Der zweite Anschluss 24 ist über eine Druckleitung 25 und einer Durchführung 26 mit einem Luftdruck der Umgebung 15 beaufschlagt. Auf diese Weise kann der Differenzdrucksensor 22 die Ist-Druckdifferenz zwischen Luftraum 16 und Umgebung 15 direkt messen, ohne dass es einer Drehzahländerung bedarf. Allerdings muss die Drehzahl dann ungleich 0 Umdrehungen/min sein.

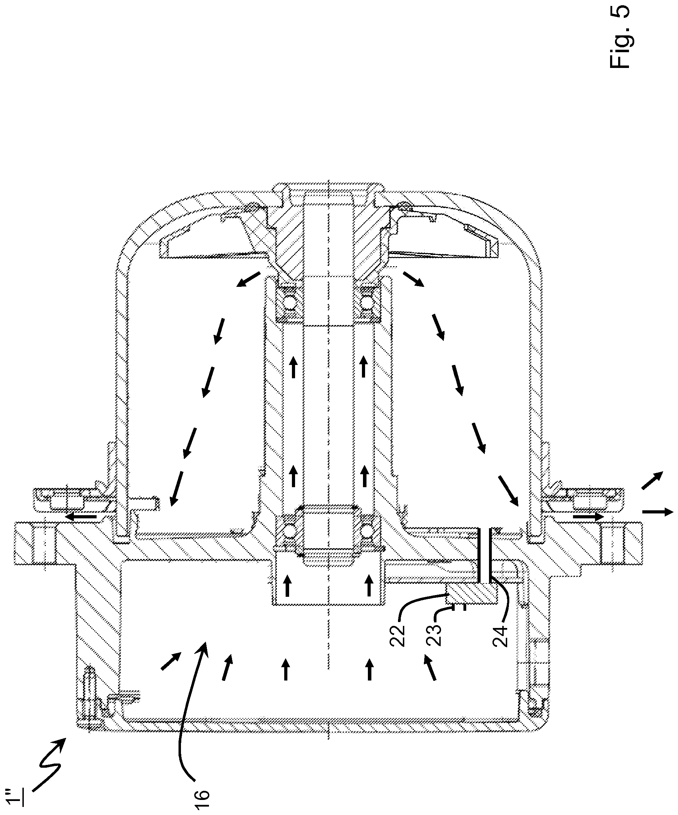

In Fig. 5 ist ein drittes Ausführungsbeispiel eines erfindungsgemäßen Elektromotors 1" dargestellt, das ebenfalls einen Differenzdrucksensor 22 nutzt. Der erste Anschluss 23 des Differenzdrucksensors 22 ist wiederum mit einem Luftdruck in dem Luftraum 16 beaufschlagt. Der zweite Anschluss 24 ist auf der der Statorbuchse 4 zugewandten Seite des Differenzdrucksensors 22 angeordnet und durch die Statorbuchse 4 hindurch in den Rotorraum kontaktiert. Auch bei diesem Ausführungsbeispiel kann der Differenzdrucksensor 22 eine Ist-Druckdifferenz bestimmen, die von dem Verschmutzungsgrad an dem Kühlrad 11 und/oder an dem Bereich 13 abhängig ist.

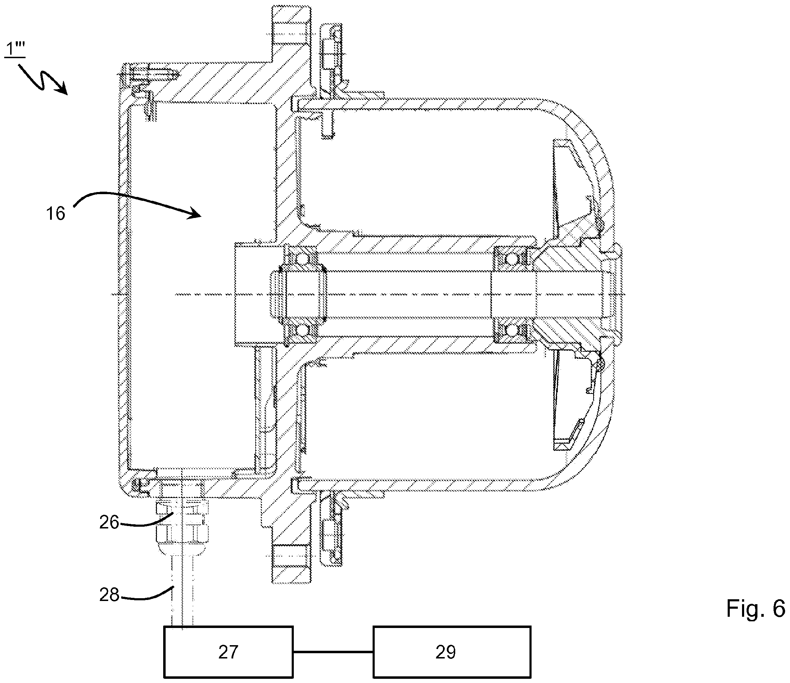

Fig. 6 zeigt ein viertes Ausführungsbeispiel eines erfindungsgemäßen Elektromotors 1‴. Dieses Ausführungsbeispiel ähnelt in weiten Teilen dem anderen Ausführungsbeispielen. Statt des internen Drucksensors 21, 22 innerhalb des Luftraums 16 ist hier jedoch ein "externer" Drucksensor 27 genutzt, der durch eine Durchführung 26 über eine Druckleitung 28 mit dem Luftraum 16 verbunden ist. Da durch die Druckleitung 28 der Luftdruck innerhalb des Luftraums 16 annähernd gleich zu einem Luftdruck in einem Messraum bei dem Drucksensor 27 ist, kann durch den Drucksensor 27 ein für den Luftraum 16 repräsentativer Druckwert gemessen werden. Durch den Drucksensor 27 gemessene Druckwerte werden dann einer Auswerteeinheit 29 zugeführt.

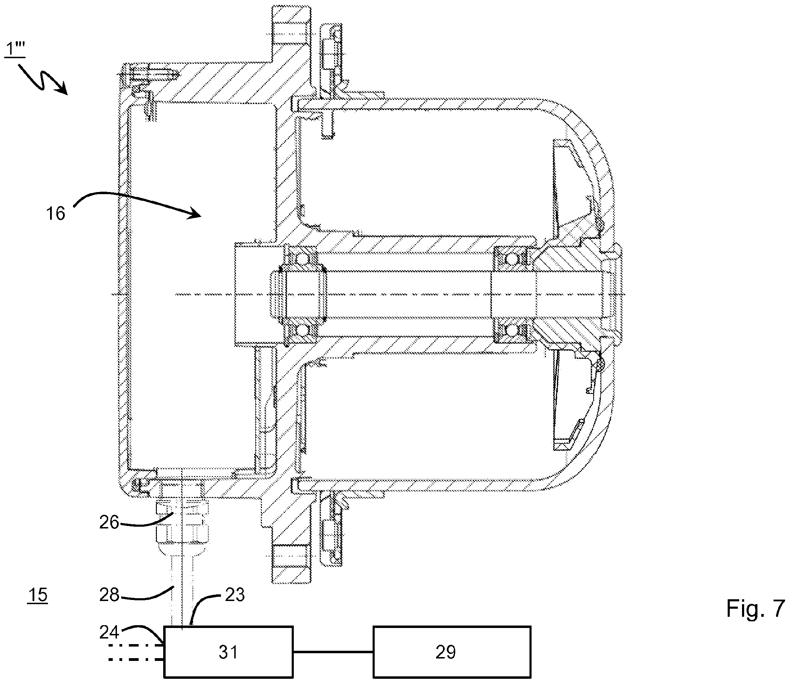

Fig. 7 zeigt eine Abwandlung des vierten Ausführungsbeispiels eines erfindungsgemäßen Elektromotors 1''' gemäß Fig. 6. Dabei ist das verwendete Drucksensorsystem - ähnlich wie bei Fig. 4 - durch einen Differenzdrucksensor 31 ausgebildet. Der Druck in dem Luftraum 16 ist über die Druckleitung 28 einem ersten Anschluss 23 des Differenzdrucksensors 31 zugeführt, während der Luftdruck der Umgebung 15 an einem zweiten Anschluss 24 anliegt. Die Erfassung der Ist-Druckdifferenz entspricht der in Fig. 4 dargestellten Beschreibung.

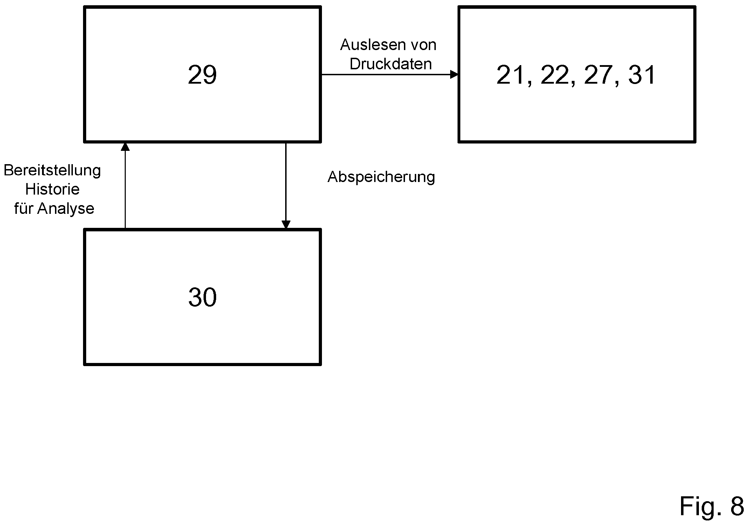

Fig. 8 zeigt ein Blockdiagramm mit Grundfunktionen einer Schaltung zur Implementierung eines Ausführungsbeispiels eines erfindungsgemäßen Verfahrens. Eine Auswerteeinheit 29 erfasst Messwerte des Drucksensors 21, 22, 27, 31 oder mehrerer Drucksensoren und stellt sie ins Verhältnis zu einer Motordrehzahl n. Die Auswerteeinheit 29 kann somit die Rolle des Datenhandlings (Kommunikation) und der Auswertungen (Analyse) übernehmen. Ein Speicher 30 ist mit der Auswerteeinheit 29 verbunden und kann zum Abspeichern der Ist-Druckdifferenz, der Drehzahl, der Kenngröße und/oder einem bestimmten Zustand genutzt werden. Bei der Analyse aktueller Sensordaten kann die Auswerteeinheit 29 auf in dem Speicher 30 abgelegte Werte zurückgreifen.

Bei der Auswerteeinheit 29 handelt es sich vorzugsweise um den integrierten Mikroprozessor eines EC-Motors, wobei die kommunikativen und analytischen Aufgaben der vorliegenden Erfindung auch von externen Recheneinheiten übernommen werden können. Beispielhaft seien benannt: ein Regelgerät, eine SPS (Speicher-Programmierte Steuerung), ein Gateway, ein Cloud-Computer etc.

In der nachfolgenden Tabelle sind Messwerte für einen Unterdruck p (in Pascal) und die zugehörige Drehzahl n angegeben. Die erste Spalte enthält das Datum der Messung, die vierte Spalte eine Kenngröße k, die durch

$$k = \frac{p}{n^2}$$

berechnet worden ist:

| Messung | Druck [Pa] | Drehzahl [1/min] | k [10^-4] |
|---|---|---|---|
| 01.01.2018 | 262 | 2500 | 0,419 |
| 01.02.2018 | 252 | 2500 | 0,403 |
| 01.03.2018 | 240 | 2500 | 0,384 |
| 01.04.2018 | 232 | 2500 | 0,371 |
| 01.05.2018 | 132 | 1950 | 0,347 |
| 01.06.2018 | 210 | 2500 | 0,336 |
| 01.07.2018 | 192 | 2500 | 0,307 |
| 01.08.2018 | 95 | 1950 | 0,250 |

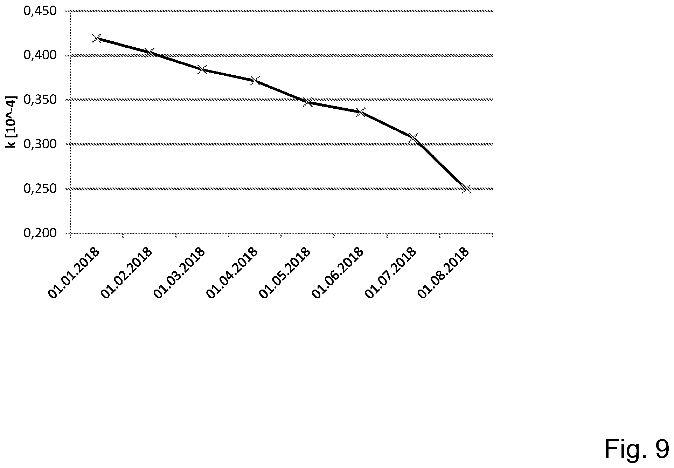

Diese Werte der Kenngröße sind in das Diagramm nach Fig. 9 eingezeichnet. Die Kenngröße k kann als Kennzahl für die Sauberkeit des Motors aufgefasst werden. Je kleiner der Wert dieser Kenngröße k ist, desto geringer die Sauberkeit des Elektromotors, bzw. umso höher dessen Verschmutzung.

Wenn der Elektromotor am 1. Januar 2018 in Betrieb genommen worden ist, so entspricht die Kenngröße k = 0,419 · 10^-4 einem sauberen Motor, einem Normalzustand. Es können Schwellenwerte definiert werden, ab denen der Normalzustand nicht mehr vorliegt. So können Schwellenwerte 0,300 und 0,375 definiert sein, wobei beispielsweise bei 0,300 < k < 0,375 der Motor als "verschmutzt" und bei k < 0,300 als "stark verschmutzt" eingestuft wird. Dies bedeutet, dass sich der Motor bis zum 1. März 2018 im "Normalzustand" befindet. Am 1. April 2018 wird der erste Schwellenwert 0,375 zum ersten Mal unterschritten, sodass eine Warnmeldung einen leicht verschmutzten Motor anzeigen kann. Am 1. August 2018 wird der zweite Schwellenwert 0,300 unterschritten, sodass eine Warnmeldung auf einen stark verschmutzen Motor hinweisen kann.

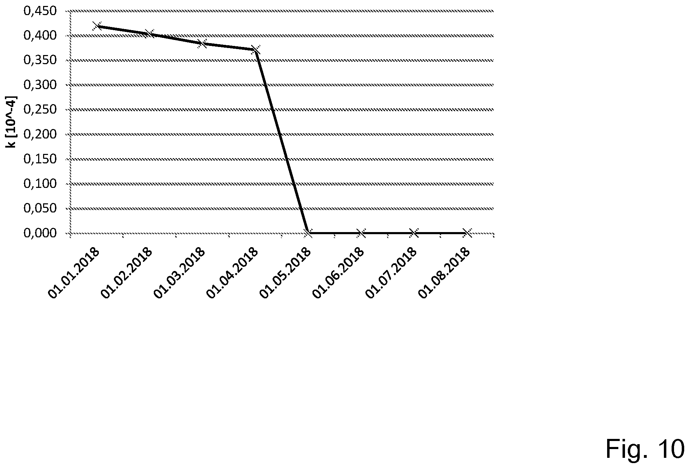

Fig. 10 zeigt ein anderes Szenarium auf. Zwischen dem 1. April 2018 und dem 1. Mai 2018 ist ein mechanischer Schaden aufgetreten, wodurch der Motor Falschluft zieht. Dadurch ist die Druckdifferenz annähernd 0. Bei diesem Szenarium kann am 1. Mai 2018 auf den Zustand "undicht" geschlossen werden. Eine Warnmeldung kann eine Wartung des Elektromotors triggern.

Hinsichtlich weiterer vorteilhafter Ausgestaltungen des erfindungsgemäßen Verfahrens, des erfindungsgemäßen Elektromotors und des erfindungsgemäßen Ventilators wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

**Bezugszeichenliste**

| | |
|---|---|
| 1, 1', 1", 1''' | Elektromotor |
| 2 | Stator |
| 3 | Rotor |
| 4 | Statorbuchse |
| 5 | Elektronikgehäuse |
| 6 | Motorelektronik |
| 7 | Abschlussdeckel |
| 8 | Motorachse |
| 9 | Lager |
| 10 | Lager |
| 11 | Kühlrad |
| 12 | Motorgehäuse |
| 13 | Bereich (Luftauslass) |
| 14 | Lagerrohr |
| 15 | Umgebung |
| 16 | Luftraum |
| 17 | Kurve für sauberen Motor |
| 18 | Kurve für verschmutzten Motor |
| 19 | Kurve für stark verschmutzten Motor |
| 20 | Kurve bei "undichtem" Motor |
| 21 | Absolutdrucksensor |
| 22 | Differenzdrucksensor |
| 23 | Erster Anschluss |
| 24 | Zweiter Anschluss |
| 25 | Druckleitung |
| 26 | Durchführung |
| 27 | Externer Drucksensor |
| 28 | Druckleitung |
| 29 | Auswerteeinheit |
| 30 | Speicher |
| 31 | Externer Differenzdrucksensor |

**Patentansprüche**

1. Verfahren zum Bestimmen eines Zustands eines Elektromotors, der einen Stator (2) und einen relativ zu dem Stator (2) drehbar gelagerten Rotor (3) aufweist, wobei aufgrund einer Drehbewegung des Rotors (3) in einem Luftraum (16) innerhalb des Elektromotors (1, 1', 1", 1''') eine Druckdifferenz (p) relativ zu einer Umgebung (15) des Elektromotors (1, 1', 1", 1''') hervorgerufen wird, wobei in einem Normalzustand des Elektromotors (1, 1', 1", 11''') die Druckdifferenz von einer Ist-Drehzahl (n) des Rotors (3) abhängig ist, umfassend die Schritte:

   Ermitteln einer Ist-Druckdifferenz (p) zwischen dem Luftraum (16) und einer Umgebung (15) des Elektromotors (1, 1', 1", 1'''),
   Ermitteln der Ist-Drehzahl (n) des Rotors (3) und
   Berechnen einer Kenngröße (k) basierend auf der Ist-Druckdifferenz (p) und der Ist-Drehzahl (n), wodurch eine für den Zustand des Elektromotors repräsentative Kenngröße (k) entsteht,

   **dadurch gekennzeichnet, dass** die Kenngröße (k) mit einem Schwellenwert verglichen wird und dass ein Zustand des Elektromotors (1, 1', 1", 11''') basierend auf einem Ergebnis des Vergleichs der Kenngröße (k) mit dem Schwellenwert bestimmt wird.

2. Verfahren nach Anspruch 1, **dadurch gekennzeichnet, dass** die Kenngröße (k) als Quotient aus Ist-Druckdifferenz (p) und dem Quadrat der Ist-Drehzahl (n) berechnet wird.

3. Verfahren nach einem der Ansprüche 1 bis 2, **dadurch gekennzeichnet, dass** die Kenngröße (k) auf einen Referenzwert genormt wird, wobei der Referenzwert vorzugsweise bei einer Erstinbetriebnahme des Elektromotors und/oder bei einer Endprüfung nach Fertigung des Elektromotors ermittelt wird.

4. Verfahren nach einem der Ansprüche 1 bis 3, **dadurch gekennzeichnet, dass** die Ist-Druckdifferenz (p) basierend auf Druckwerten (p) ermittelt wird, die mittels eines Absolutdrucksensors (21, 27) für den Luftraum (16) bei unterschiedlichen Ist-Drehzahlen gemessen wird, wobei vorzugsweise eine erste Messung bei Stillstand des Elektromotors (1, 11‴) und eine zweite Messung bei einer Ist-Drehzahl ungleich 0 durchgeführt wird oder

dass die Ist-Druckdifferenz (p) mittels zweier Absolutdrucksensoren gemessen wird, wobei ein erster Absolutdrucksensor (21, 27) mit einem Druck in dem Luftraum (16) beaufschlagt ist und ein zweiter Absolutdrucksensor einen Luftdruck misst, der repräsentativ für den Druck in der Umgebung des Elektromotors ist oder
dass die Ist-Druckdifferenz (p) mittels eines Differenzdrucksensors (22, 31) gemessen wird, wobei eine erste Sensorfläche des Differenzdrucksensors (22, 31) mit einem Druck in dem Luftraum und eine zweite Sensorfläche des Differenzdrucksensors (22) mit einem Druck in der Umgebung (15) des Elektromotors (1', 1", 1‴) beaufschlagt wird.

5. Verfahren nach einem der Ansprüche 1 bis 4, **dadurch gekennzeichnet, dass** der bestimmte Zustand des Elektromotors (1, 1', 1", 1‴) eine Verschmutzung des Elektromotors (1, 1', 1", 1‴) und/oder eine Undichtigkeit des Elektromotors (1, 1', 1", 11‴) beschreibt.

6. Verfahren nach einem der Ansprüche 1 bis 5, **dadurch gekennzeichnet, dass** bei Ermitteln der Ist-Druckdifferenz über eine Messdauer hinweg mehrere Druckdifferenzen ermittelt werden und die Ist-Druckdruckdifferenz vorzugsweise über eine Mittelwertbildung aus den mehreren Druckdifferenzen berechnet wird.

7. Elektromotor, ausgebildet zur Durchführung eines Verfahrens nach einem der Ansprüche 1 bis 6, mit einem Stator (2), einem relativ zu dem Stator (2) drehbar gelagerten Rotor (3) und einem innerhalb des Elektromotors gebildeten Luftraums (16), wobei in einem Normalzustand des Elektromotors (1, 1', 1", 1‴) der Rotor (3) aufgrund seiner Drehbewegung in dem Luftraum (16) eine Druckdifferenz gegenüber einer Umgebung (15) des Elektromotors (1, 1', 1", 1‴) hervorruft, wobei der Elektromotor (1, 1', 1", 1‴) zusätzlich ein Drucksensorsystem, ein Drehzahlermittlungssystem und eine Auswerteeinheit (24) umfasst, wobei das Drucksensorsystem zum Ermitteln einer Ist-Druckdifferenz zwischen einer Umgebung (15) des Elektromotors (1, 1', 1", 1‴) und dem Luftraum (16) ausgebildet ist, wobei das Drehzahlermittlungssystem zum Ermitteln einer Ist-Drehzahl (n) des Rotors (3) ausgebildet ist und wobei die Auswerteeinheit (29) dazu ausgebildet ist, basierend auf der Ist-Druckdifferenz und der Ist-Drehzahl einen Zustand des Elektromotors (1, 1', 1", 1‴) zu bestimmen, wobei
ein Kühlrad (11) vorgesehen sein kann, das mit dem Rotor (3) gekoppelt ist, wobei das Kühlrad (11) die Druckdifferenz in dem Luftraum (16) hervorrufen kann.

8. Elektromotor nach Anspruch 7, **gekennzeichnet durch** einen Luftauslass (13), vorzugsweise mit Stator-Rotor-Rippen und/oder einem Labyrinthspalt, wobei vorzugsweise ein Verschmutzungsgrad des Luftauslasses (13) die Ist-Druckdifferenz in dem Luftraum (16) beeinflusst.

9. Elektromotor nach Anspruch 7 oder 8, **dadurch gekennzeichnet, dass** das Drucksensorsystem durch einen Absolutdrucksensor (21, 27) mit drehzahlbasierter Berechnungseinheit, zwei Absolutdrucksensoren oder einen Differenzdrucksensor (22, 31) gebildet ist.

10. Elektromotor nach einem der Ansprüche 7 bis 9, **dadurch gekennzeichnet, dass** der Luftraum (16) in einem Elektronikgehäuse (5) gebildet ist, das in oder an dem Elektromotor (1, 1', 1", 1‴) ausgebildet ist, wobei das Elektronikgehäuse (5) vorzugsweise an einer Statorbuchse (4) des Elektromotors (1, 1', 1", 1‴) ausgebildet ist.

11. Elektromotor nach einem der Ansprüche 7 bis 10, **dadurch gekennzeichnet, dass** der Elektromotor (1, 1', 1", 1‴) ein EC-Motor, Electronically Commutated Motor, und/oder ein Außenläufermotor ist.

12. Elektromotor nach einem der Ansprüche 7 bis 11, **gekennzeichnet durch** eine Kommunikationseinheit, die dazu ausgebildet ist, mittels der Auswerteeinheit (29) gewonnene Zustandsinformationen an eine Managementeinheit zu senden.

13. Elektromotor nach einem der Ansprüche 7 bis 12, **gekennzeichnet durch** einen Speicher (30), wobei mittels der Auswerteeinheit (29) gewonnene Zustandsinformationen und/oder Kenngrößen und/oder daraus abgeleitete weitere Größen in dem Speicher (30) abgelegt werden.

**14.** Ventilator mit einem Elektromotor nach einem der Ansprüche 7 bis 13, wobei der Rotor (3) des Elektromotors (1, 1', 1", 1‴) mit einem Laufrad des Ventilators gekoppelt ist.

**Claims**

**1.** Method for determining a state of an electric motor which has a stator (2) and a rotor (3) which is rotatably supported relative to the stator (2), wherein, as a result of a rotational movement of the rotor (3) in an air space (16) within the electric motor (1, 1', 1'', 1‴), a pressure difference (p) relative to an environment (15) of the electric motor (1, 1', 1'', 1‴) is brought about, wherein in a normal state of the electric motor (1, 1', 1", 1‴) the pressure difference is dependent on an actual speed (n) of the rotor (3), comprising the steps of:

establishing an actual pressure difference (p) between the air space (16) and an environment (15) of the electric motor (1, 1', 1'', 1‴),
establishing the actual speed (n) of the rotor (3), and calculating a characteristic variable (k) based on the actual pressure difference (p) and the actual speed (n), whereby a characteristic variable (k) which is representative of the state of the electric motor is produced,
**characterised in that** the characteristic variable (k) is compared with a threshold value and **in that** a state of the electric motor (1, 1', 1'', 1‴) is determined based on a result of the comparison of the characteristic variable (k) with the threshold value.

**2.** Method according to claim 1, **characterised in that** the characteristic variable (k) is calculated as a quotient of the pressure difference (p) and the square of the actual speed (n).

**3.** Method according to either of claims 1 to 2,
**characterised in that** the characteristic variable (k) is standardised to a reference value, wherein the reference value is preferably established when the electric motor is first started up and/or during a final examination after the electric motor has been produced.

**4.** Method according to any one of claims 1 to 3,
**characterised in that** the actual pressure difference (p) is established based on pressure values (p) which are measured by means of an absolute pressure sensor (21, 27) for the air space (16) at different actual speeds, wherein a first measurement is preferably carried out with the electric motor (1, 1‴) stopped and a second measurement is carried out at an actual speed which is not equal to zero or **in that** the actual pressure difference (p) is measured by means of two absolute pressure sensors, wherein a first absolute pressure sensor (21, 27) is acted on with a pressure in the air space (16) and a second absolute pressure sensor measures an air pressure which is representative of the pressure in the environment of the electric motor or **in that** the actual pressure difference (p) is measured by means of a differential pressure sensor (22, 31), wherein a first sensor face of the differential pressure sensor (22, 31) is acted on with a pressure in the air space and a second sensor face of the differential pressure sensor (22) is acted on with a pressure in the environment (15) of the electric motor (1', 1", 1‴).

**5.** Method according to any one of claims 1 to 4,
**characterised in that** the specific state of the electric motor (1, 1', 1'', 1‴) describes a contamination of the electric motor (1, 1', 1'', 1‴) and/or a leak of the electric motor (1, 1', 1'', 1‴).

**6.** Method according to any one of claims 1 to 5,
**characterised in that**, when the actual pressure difference is established, a plurality of pressure differences are established over a measurement time and the actual pressure difference is preferably calculated by means of averaging from the plurality of pressure differences.

**7.** Electric motor constructed to carry out a method according to any one of claims 1 to 6, having a stator (2), a rotor (3) which is rotatably supported relative to the stator (2) and an air space (16) formed inside the electric motor, wherein in a normal state of the electric motor (1, 1', 1", 1‴) the rotor (3) as a result of its rotational movement in the air space (16) brings about a pressure difference with respect to an environment (15) of the electric motor (1, 1', 1'', 1‴), wherein the electric motor (1, 1', 1'', 1‴) additionally comprises a pressure sensor system, a speed establishment system and an evaluation unit (24), wherein the pressure sensor system is constructed to establish an actual pressure difference between an environment (15) of the electric motor (1, 1', 1'', 1''') and the air space (16), wherein the speed establishment system is constructed to establish an actual speed (n) of the rotor (3) and wherein the evaluation unit (29) is constructed, based on the actual pressure difference and the actual speed, to determine a state of the electric motor (1, 1', 1", 1'''), wherein there may be provided a cooling wheel (11) which is coupled to the rotor (3), wherein the cooling wheel (11) can bring about the pressure difference in the air space (16).

8. Electric motor according to claim 7, **characterised by** an air outlet (13), preferably having stator/rotor ribs and/or a labyrinth gap, wherein a degree of contamination of the air outlet (13) preferably influences the actual pressure difference in the air space (16).

9. Electric motor according to claim 7 or 8, **characterised in that** the pressure sensor system is formed by means of an absolute pressure sensor (21, 27) with a speed-based calculation unit, two absolute pressure sensors or a differential pressure sensor (22, 31).

10. Electric motor according to any one of claims 7 to 9, **characterised in that** the air space (16) is formed in an electronic housing (5) which is formed in or on the electric motor (1, 1', 1", 1'''), wherein the electronic housing (5) is preferably formed on a stator bush (4) of the electric motor (1, 1', 1'', 1''').

11. Electric motor according to any one of claims 7 to 10, **characterised in that** the electric motor (1, 1', 1'', 1''') is an EC motor, Electronically Commutated Motor, and/or an external rotor motor.

12. Electric motor according to any one of claims 7 to 11, **characterised by** a communication unit which is constructed to transmit state information items obtained by the evaluation unit (29) to a management unit.

13. Electric motor according to any one of claims 7 to 12, **characterised by** a store (30), wherein state information items obtained by the evaluation unit (29) and/or characteristic variables and/or further variables which are derived therefrom are stored in the store (30).

14. Fan having an electric motor according to any one of claims 7 to 13, wherein the rotor (3) of the electric motor (1, 1', 1'', 1''') is coupled to an impeller of the fan.

## Revendications

1. Procédé de détermination de l'état d'un moteur électrique, qui comprend un stator (2) et un rotor (3) logé de manière rotative par rapport au stator (2), dans lequel, du fait d'un mouvement de rotation du rotor (3) dans un entrefer (16) à l'intérieur du moteur électrique (1, 1', 1", 1''') une différence de pression (p) par rapport à un environnement (15) du moteur électrique (1, 1', 1", 1''') est générée, dans lequel, dans un état normal du moteur électrique (1, 1', 1", 1"'), la différence de pression dépend d'une vitesse de rotation effective (n) du rotor (3), comprenant les étapes suivantes :

   détermination d'une différence de pression effective (p) entre l'entrefer (16) et un environnement (15) du moteur électrique (1, 1', 1", 1'''),
   détermination de la vitesse de rotation effective (n) du rotor (3) et
   calcul d'une grandeur caractéristique (k) sur la base de la différence de pression effective (p) et de la vitesse de rotation effective (n), ce qui permet d'obtenir une grandeur caractéristique (k) représentative de l'état du moteur électrique,
   **caractérisé en ce que** la grandeur caractéristique (k) est comparée avec une valeur seuil et **en ce qu'**un état du moteur électrique (1, 1', 1", 1''') est déterminée sur la base d'un résultat de la comparaison de la grandeur caractéristique (k) avec la valeur seuil.

2. Procédé selon la revendication 1, **caractérisé en ce que** la grandeur caractéristique (k) est calculée comme le rapport entre la différence de pression effective (p) et le carré de la vitesse de rotation effective (n).

3. Procédé selon l'une des revendications 1 à 2, **caractérisé en ce que** la grandeur caractéristique (k) est normalisée par rapport à une valeur de référence, dans lequel la valeur de référence est déterminée de préférence lors d'une première mise en service du moteur électrique et/ou lors d'un contrôle final après la fabrication du moteur électrique.

**4.** Procédé selon l'une des revendications 1 à 3, **caractérisé en ce que** la différence de pression effective (p) est déterminée sur la base de valeurs de pression (p) qui sont mesurées au moyen d'un capteur de pression absolue (21, 27) pour l'entrefer (16) à différentes vitesses de rotation effectives, dans lequel, de préférence, une première mesure est effectuée lorsque le moteur électrique (1, 1''') est à l'arrêt et une deuxième mesure est effectuée lorsque la vitesse de rotation n'est pas égale à 0 ou

en ce que la différence de pression effective (p) est mesurée au moyen de deux capteurs de pression absolue, dans lequel un premier capteur de pression absolue (21, 27) est alimentée par une pression dans l'entrefer (16) et un deuxième capteur de pression absolue mesure une pression d'air qui est représentative de la pression dans l'environnement du moteur électrique ou
**en ce que** la différence de pression effective (p) est mesurée au moyen d'un capteur de pression différentielle (22, 31), dans lequel une première surface de capteur du capteur de pression différentielle (22, 31) est alimentée avec une pression dans l'entrefer et une deuxième surface de capteur du capteur de pression différentielle (22) est alimentée avec une pression dans l'environnement (15) du moteur électrique (1, 1", 1''').

**5.** Procédé selon l'une des revendications 1 à 4, **caractérisé en ce que** l'état déterminé du moteur électrique (1, 1', 1", 1''') décrit un encrassement du moteur électrique (1, 1', 1", 1''') et/ou un défaut d'étanchéité du moteur électrique (1, 1', 1", 1''').

**6.** Procédé selon l'une des revendications 1 à 5, **caractérisé en ce que**, lors de la détermination de la différence de pression effective, plusieurs différences de pression sont déterminées sur une durée de mesure et la différence de pression effective est calculée de préférence à l'aide d'un calcul de valeur moyenne à partir des plusieurs différences de pression.

**7.** Moteur électrique conçu pour l'exécution du procédé selon l'une des revendications 1 à 6, avec un stator (2), un rotor (3) logé de manière rotative par rapport au stator (2) et un entrefer (16) formé à l'intérieur du moteur électrique, dans lequel, dans un état normal du moteur électrique (1, 1', 1", 1'''), le rotor (3) génère, dans l'entrefer (16), du fait de son mouvement de rotation, une différence de pression par rapport à un environnement (15) du moteur électrique (1, 1', 1", 1'''), dans lequel le moteur électrique (1, 1', 1", 1''') comprend en outre un système de capteurs de pression, un système de détermination de vitesses de rotation et une unité d'analyse (24), dans lequel le système de capteurs de pression est conçu pour la détermination d'une différence de pression effective entre un environnement (15) du moteur électrique (1, 1', 1", 1''') et l'entrefer (16), dans lequel le système de détermination de vitesses de rotation est conçu pour la détermination d'une vitesse de rotation effective (n) du rotor (3) et dans lequel l'unité d'analyse (29) est conçue pour déterminer un état du moteur électrique (1, 1', 1", 1''') sur la base de la différence de pression effective et de la vitesse de rotation effective, dans lequel
une roue de refroidissement (11) peut être prévue, qui est couplée avec le rotor (3), dans lequel la roue de refroidissement (11) peut générer la différence de pression dans l'entrefer (16).

**8.** Moteur électrique selon la revendication 7, **caractérisé par** une sortie d'air (13), de préférence avec des ailettes stator-rotor et/ou un interstice labyrinthique, dans lequel, de préférence, un degré d'encrassement de la sortie d'air (13) influence la différence de pression effective dans l'entrefer (16).

**9.** Moteur électrique selon la revendication 7 ou 8, **caractérisé en ce que** le système de capteurs de pression est constitué d'un capteur de pression absolue (21, 27) avec une unité de calcul basée sur la vitesse de rotation, deux capteurs de pression absolue, ou un capteur de pression différentielle (22, 31).

**10.** Moteur électrique selon l'une des revendications 7 à 9, **caractérisé en ce que** l'entrefer (16) est formé dans un boîtier électronique (5) qui est prévu dans ou sur le moteur électrique (1, 1', 1", 1'''), dans lequel le boîtier électronique (5) est prévu de préférence sur une douille de stator (4) du moteur électrique (1, 1', 1", 1''').

**11.** Moteur électrique selon l'une des revendications 7 à 10, **caractérisé en ce que** le moteur électrique (1, 1', 1", 1''') est un moteur EC (Electronically Connected Motor) et/ou un moteur à rotor externe.

**12.** Moteur électrique selon l'une des revendications 7 à 11, **caractérisé par** une unité de communication qui est conçue pour envoyer, au moyen de l'unité d'analyse (29), les informations d'état obtenues à une unité de gestion.

**13.** Moteur électrique selon l'une des revendications 7 à 12, **caractérisé par** une mémoire (30), dans lequel les informations d'état et/ou les grandeurs caractéristiques et/ou d'autres grandeurs dérivées de celles-ci, obtenues au moyen de l'unité d'analyse (29), sont enregistrées dans la mémoire (30).

14. Ventilateur avec un moteur électrique selon l'une des revendications 7 à 13, dans lequel le rotor (3) du moteur électrique (1, 1', 1", 1''') est couplé avec une turbine du ventilateur.

Fig. 1

Fig. 2

Fig. 3

Fig. 4

EP 3 909 125 B1

EP 3 909 125 B1

Fig. 5

Fig. 6

1'''

16

26

28

27

29

Fig. 7

EP 3 909 125 B1

EP 3 909 125 B1

Fig. 8

EP 3 909 125 B1

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018211838 A1
- WO 2016044426 A1
- DE 102015105188 A1
- CN 109038961 A
- DE 102019201409 A1
- DE 102019201412 A1